# EUROPÄISCHE PATENTSCHRIFT

(11) **EP 0 629 298 B1**
(45) Veröffentlichungstag und Bekanntmachung des Hinweises auf die Patenterteilung: **19.06.1996**
(21) Anmeldenummer: 93903807.1
(22) Anmeldetag: 18.02.1993
(51) Int. Cl.: G02B 6/44

(54) **OPTISCHES KABEL UND VERFAHREN ZU DESSEN HERSTELLUNG**
OPTICAL CABLE AND PROCESS FOR MANUFACTURING THE SAME
CABLE OPTIQUE ET SON PROCEDE DE FABRICATION

(30) Priorität: 03.03.1992 DE 4206653
(43) Veröffentlichungstag der Anmeldung: 21.12.1994
(73) Patentinhaber: SIEMENS AKTIENGESELLSCHAFT, D-80333 München (DE)
(72) Erfinder: PASCHER, Helmut, D-8000 München 70 (DE)
(86) Internationale Anmeldenummer: DE9300143
(87) Internationale Veröffentlichungsnummer: WO9318423

(56) Entgegenhaltungen:
- EP-A- 0 295 130
- EP-A- 0 495 400
- DE-A- 3 839 109
- DE-A- 4 128 935
- FR-A- 2 549 235
- GB-A- 2 040 063

## Beschreibung

Die Erfindung betrifft ein optisches Kabel mit selbständigen Kammerelementen, die in mindestens einer Lage ringförmig um die Kabelachse angeordnet sind und zur Aufnahme von Lichtwellenleitern dienen.

Ein optisches Kabel dieser Art ist aus der DE-A1-38 39 109 bekannt. Dessen Kabelseele besteht aus mehreren Kammerelementen für die Aufnahme von Lichtwellenleitern.

Ein Nachteil eines derart aufgebauten optischen Kabels bestehe vor allem darin, daß die Dimensionierung und Formgebung der bekannten Kammerelemente die Festigkeit der Konstruktion der Kabelseele allein bestimmt. Bei zu großen radialen Belastungen besteht möglicherweise die Gefahr einer Deformation der Kammerelemente und gegebenenfalls einer Schädigung der in ihnen eingebetteten Lichtwellenleiter. Die Deformationsgefahr kann bei herkömmlicher Auslegung bezüglich der Verbiegung der Seitenwände nicht wesentlich reduziert werden, weil das maximale Biegemoment an einer Stelle der Seitenwand des U-Profils auftritt, an der naturgemäß am wenigsten Platz für eine Verstärkung zur Verfügung steht, nämlich innen. Eine Integration der Stützfunktion in die Kammerelemente würde zu einer deutlichen Unsymmetrie derselben führen, die die Herstellung der Kammerprofile und ihre Zwischenlagerung auf Spulen im Fertigungsdurchlauf erschweren könnte, zumal die transversalen Abmessungen der Kammern für die Bandstapel relativ kritisch sind.

Der Erfindung liegt die Aufgabe zugrunde, einen Weg aufzuzeigen, wie bei einem optischen Kabel mit Kammerelementen in einfacher und zuverlässiger Weise die Festigkeit der Konstruktion der Kabelseele verbessert werden kann.

Diese Aufgabe wird bei einem optischen Kabel der eingangs genannten Art dadurch gelöst, daß zwischen den selbständigen Kammerelementen Stützelemente vorgesehen sind, daß die Stützelemente im wesentlichen bezogen auf die Kabelachse radial verlaufend angeordnet sind, und daß die radiale Erstreckung der Stützelemente mindestens gleich der radialen Erstreckung der selbständigen Kammerelemente gewählt ist.

Die Erfindung zeichnet sich vor allem dadurch aus, daß die Stützelemente zwischen den selbständigen Kammerelementen wie abstützende Pfeiler gegenüber Radial- und Querkräften wirken. Bei der Erfindung ist es somit nicht notwendig, daß die selbständigen Kammerelemente allein die Festigkeit und Steifigkeit der Konstruktion der Kabelseele bestimmen. Letztere Eigenschaften des Kabelaufbaus werden zum überwiegenden Teil durch die Widerstands- und Stützfunktion der Stützelemente gegenüber Quer- und Radialkräften sichergestellt, das heißt, die Druckfestigkeit und Steifigkeit des Kabels wird im wesentlichen von den Stützelementen übernommen. Auf diese Weise können die Kammerwände der Kammerelemente relativ dünn, das heißt filigran, ausgeführt werden. Aufgrund ihrer reduzierten Steifigkeit und Festigkeit weisen z.B. filigrane Kammerelemente eine wesentlich verbesserte Biegefähigkeit auf. Eine vergrößerte Elastizität der Kammerelemente erleichtert zudem deren Handhabung während des Aufseilvorgangs, besonders bei der Verarbeitung sehr großer Lauf längen der Kammerelemente. Die Stützelemente zwischen den Kammerelementen können in einfacher Weise zusammen mit den Kammerelementen in einem einzigen Arbeitsvorgang verseilt werden.

Gemäß einer zweckmäßigen Weiterbildung der Erfindung weisen die Stützelemente jeweils zumindest einen querverlaufenden Ansatz auf. Dadurch erreicht man, daß zumindest die Zwischenräume zwischen den Kammerelementen, d.h. die Zwickel in der Kabelseele oder/und sogar die Kammerelemente ganz oder teilweise abgedeckt werden können. Somit kann man sich gegebenenfalls das zusätzliche Aufbringen einer Abdeckschicht auf den Kammerelementen ersparen, bzw. diese kann wesentlich einfacher oder dünner ausgebildet werden.

Die Erfindung betrifft auch ein Verfahren zur Herstellung eines optischen Kabels, welches dadurch gekennzeichnet ist, daß die selbständigen Kammerelemente in mindestens einer Verseillage ringförmig um die Kabelachse angeordnet werden, und daß die Stützelemente zwischen den Kammerelementen bezogen auf die Kabelachse radial verlaufend von außen eingefügt werden.

Sonstige Weiterbildungen der Erfindung sind in Unteransprüchen wiedergegeben.

Die Erfindung und ihre Weiterbildungen werden nachfolgend anhand von Zeichnungen näher erläutert.

Es zeigen:
- Figur 1: im Querschnitt in vergrößerter Darstellung ein optisches Kabel gemäß der Erfindung mit einer Lage aus Kammerelementen und dazwischenliegenden Stützelementen.
- Figur 2: im Querschnitt eine Abwandlung des optischen Kabels nach Figur 1 mit einem rohrförmigen Kernelement,
- Figur 3: im Querschnitt eine dritte Abwandlung des optischen Kabels nach Figur 1 mit zweigliedrig ausgebildeten Stützelementen,
- Figur 4: im Querschnitt eine dritte Abwandlung des optischen Kabels nach Figur 1 mit Stützelementen ohne Ansätze,
- Figur 5: im Querschnitt ein Ausführungsbeispiel eines erfindungsgemäßen optischen Kabels mit zwei Lagen aus Kammerelementen und dazwischenliegenden Stützelementen,
- Figur 6: in schematischer Darstellung eine Einrichtung zur Durchführung des erfindungsgemäßen Verfahrens.

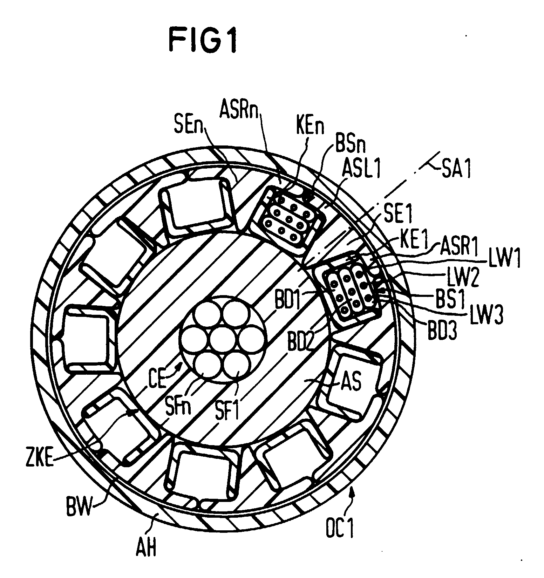

Figur 1 zeigt im Querschnitt ein optisches Kabel OC1 mit einem Kernelement ZKE, mit einer auf diesem aufgebrachten Lage aus Kammerelementen KE1 bis KEn, mit zwischen diesen eingefügten Stützelementen SE1 bis SEn und mit einer äußeren Ummantelung aus einer Bewehrung BW und einer Außenhülle AH.

Das Kernelement ZKE weist in seinem Zentrum ein zug- und stauchfestes Element CE als Kern auf, um das optische Kabel OC1 gegen Zug- und Stauchbeanspruchungen unempfindlich zu machen. Das zugfeste Element CE kann zum Beispiel vorteilhaft aus mehreren Stahl- oder Aramidfasern SF1 - SFn aufgebaut werden. Auf diesem zug- und stauchfesten Element CE ist eine Aufdickungsschicht AS aufgebracht. Diese wird so dimensioniert, daß der Durchmesser des Kernelements ZKE ausreicht, eine gewünschte Anzahl von Kammerelementen KE1 bis KEn ringförmig in einer Lage um die Aufdickungsschicht AS herum anzuordnen. Für die Aufdickungsschicht AS ist zweckmäßigerweise ein härteres Material als für die Kammerelemente KE1 bis KEn verwendet, wie zum Beispiel vorteilhaft HDPE, PC, PB.

Dadurch wird sichergestellt, daß das Kernelement ZKE ein steifes, stauchfestes Fundament für die auf ihn direkt angeordnete Lage aus Kammerelementen KE1 bis KEn und den dazwischen eingelagerten Stützelementen SE1 bis SEn darstellt.

Die Kammerelemente KE1 bis Ken sind durch Verseilen in einer Lage ringförmig auf dem Kernelement ZKE möglichst dicht bzw. direkt anliegend angeordnet. Die Kammerelemente KE1 bis KEn in Figur 1 weisen im Querschnitt vorzugsweise etwa ein U-förmiges Profil mit jeweils einer radial nach außen gerichteten Öffnung für die Aufnahme von etwa rechteckförmigen Bandstapeln BS1 bis BSn auf. Für die Aufnahme von Lichtwellenleiter-Bandleitungen eignen sich vorzugsweise auch Kammerelemente KE1 bis KEn mit etwa rechteckförmigen Öffnungen. In Figur 1 sind zugunsten der Übersichtlichkeit nur die Kammerelemente KE1 und KEn, zugehörige Lichtwellenleiter-Bändchenstapel BS1 und BSn sowie die Stützelemente SE1 und SEn mit Bezugszeichen versehen. Aus diesem Grund sind deren Abmessungen vergrößert dargestellt. die übrigen Kammerelemente und Stützelemente sind in analoger Weise aufgebaut und angeordnet. In Figur 1 sind beispielhaft im Kammerelement KE1 drei etwa rechteckförmige Bandleitungen BD1 bis BD3 zu einem etwa rechteckförmigen Bandstapel BS1 zusammengefaßt, wobei außen gegen die Kammerwandungen kein oder nur ein schmaler Spalt freigelassen wird. Aufgrund der U-förmigen Querschnittsform des Kammerelements KE1 wird der etwa rechteckförmige Bandstapel BS1 in Umfangsrichtung gesehen lagegesichert, wobei die Seitenwände des Kammerelementes KE1 die Außenwände des Bandstapels BS1 schachtelartig umgreifen. Um die Halterwirkung des Kammerelements KE1 auf die drei Bandleitungen BD1 bis BD3 zu unterstützen, das heißt, ein Verrutschen der drei Bandleitungen BD1 bis BD3 im Stapel BS1 zu verhindern, können diese gegebenenfalls mit einer leicht haftenden Füllmasse aufeinander und in das Kammerelement KE1 verklebt werden. Gleichzeitig kann man mit Hilfe dieser Maßnahme gegebenenfalls eine gewisse Längswasserdichtigkeit erreichen. Die Seitenwände der U-förmigen Kammerelemente KE1 bis KEn können zweckmäßig etwas über die rechteckförmigen Bandstapel BS1 bis BSn hinausragen. Entsprechendes gilt auch für die übrigen Kammerelemente.

In einer Lichtwellenleiter-Bandleitung können zweckmäßig zwischen 2 und 20 Lichtwellenleiter vorgesehen sein. Zwischen 1 bis 20 Bandleitungen können vorteilhaft zu einem Bandstapel zusammengefaßt sein. Gegebenenfalls kann es auch zweckmäßig sein, Lichtwellenleiter lose oder vorzugsweise zu etwa rechteckförmigen Bündeln zusammengefaßt in die Kammerelemente KE1 - KEn einzulegen.

Zweckmäßigerweise ist eine radiale Erstreckung der Kammerelemente KE1 bis KEn von mindestens 1 mm, bevorzugt zwischen 3 und 10 mm, und eine Erstreckung längs des Umfangs von mindestens 2 mm, bevorzugt zwischen 3 und 10 mm, gewählt.

Da die Kammerelemente KE1 bis KEn im wesentlichen nur eine Lagesicherungsfunktion der Bandstapel BS1 bis BSn wahrnehmen, können sie vorteilhaft relativ filigran ausgeführt werden. Dies bietet den Vorteil einer nahezu optimalen Querschnittsausnutzung der Kammerelemente KE1 bis KEn, da diese keine tragende Funktion mehr aufweisen müssen, sondern nur die Bandstapel in ihrer Lage sichern sollen. Zugleich erlaubt die erhöhte Flexibilität der Kammerelemente KE1 bis KEn gewisse Ausgleichsbewegungen und Verformungen der Kammerelemente KE1 bis KEn in Umfangsrichtung und in radialer und axialer Richtung bei auftretenden Biege-, Druck-, Knick-, Zug- und oder Torsionsbeanspruchungen. Aus diesem Grund können die Kammerelemente KE1 bis KEn zweckmäßigerweise nur eine Wandstärke zwischen 0,3 mm und 1 mm aufweisen. Für die Kammerelemente KE1 bis KEn ist besonders vorteilhaft ein formbeständiges, dabei elastisches Material wie zum Beispiel PC, PBTP, PA verwendet.

Die Stützelemente SE1 bis SEn sind durch Einfügen von außen, wie zum Beispiel mit Hilfe eines Verseilvorgangs, zwischen jeweils zwei benachbarten Kammerelementen KE1 bis KEn angeordnet. Sie weisen vorzugsweise eine etwa T-Trägerförmige Querschnittsform auf. Die radiale Erstreckung ihres Mittelteils (T-Trägerfuß) ist dabei wesentlich größer als die Erstreckung ihres Mittelteils in Umfangsrichtung, das heißt, ihre Wandstärke, gewählt. An den äußeren Enden der Stützelemente SE1 bis SEn sind jeweils zwei symmetrische Ansätze vorgesehen. Beim Stützelement SE1 sind diese mit ASL1 und ASR1 bezeichnet. Diese symmetrischen Ansätze ASL1 und ASR1 verlaufen quer zur radial verlaufenden Symmetrieebene SA1 in entgegengesetzte Richtungen, d.h., in Umfangsrichtung. Im Vergleich zur Wandstärke der Kammerelemente KE1 bis KEn weisen die Stützelemente SE1 bis SEn zweckmäßig eine größere Wandstärke, insbesondere zwischen 0,5 mm und 2 mm, auf. Zweckmäßigerweise weisen die Stützelemente SE1 bis SEn eine wesentlich kleinere Wandbreite als die Erstreckung der Kammerelemente KE1- KEn in Umfangsrichtung auf. Die Stützelemente SE1 bis SEn erstrecken sich in radialer Richtung mindestens genauso weit wie die Kammerelemente KE1 bis KEn. Besonders vorteilhaft wird die radiale Erstreckung der Stützelemente SE1 bis SEn größer als die radiale Erstreckung der Kammerelemente KE1 bis KEn gewählt und zwar insbesondere um 1 mm bis 2 mm. Mit Hilfe dieser Maßnahme erreicht man, daß die Stützelemente SE1 bis SEn radial wirkende Querdruckkräfte wie abstützende Pfeiler auffangen. Dieser Mechanismus wird insbesondere im Zusammenspiel mit dem als stauchfestes Fundament wirkenden Kernelement ZKE erzielt. Wirkt beispielsweise eine Querdruckkraft radial nach innen auf das Stützelement SE1 ein, so wird im wesentlichen durch das direkte Anliegen des Stützelements SE1 an dem Kernelement ZKE diese Kraft radial nach innen zum Kernelement ZKE abgeleitet, ohne eine Stauchung der Kammerelemente KE1 bis KEn und der in sie eingelagerten Bandstapel BS1 bis BSn zu verursachen. Zur Unterstützung der Pfeiler- und Stützwirkung der Stützelemente SE1 bis SEn kann für diese vorteilhaft ein mindestens ebenso hartes Material wie für die Kammerelemente KE1 bis KEn verwendet werden. Als Materialien eignen sich zweckmäßigerweise PC, PA, PP, HDPE. Die Auswahlmöglichkeit ist etwas größer, weil an die Stützelemente geringere Anforderungen an die Längenkonstanz gestellt werden müssen als an die Kammerelemente.

Die Außenwände des Stützelementes SE1 berühren zweckmäßig die Außenwände der beiden benachbarten Kammerelemente KE1 und KEn im Bereich der Aufliegefläche des Stützelementes SE1 auf dem Kernelement ZKE. Vorteilhaft liegen die Außenwände der Stützelemente SE1 bis SEn an den Außenwänden der benachbarten Kammerelemente KE1 - KEn in ihrer vollen Länge an. Dadurch sind die Kammerelemente KE1 bis KEn um den Umfang in gewissem Maße auf ihren Plätzen fixiert, das heißt, es wird eine gewisse Lagefixierung der Kammerelemente KE1 bis KEn erzielt. Da sich die Zwickel zwischen den Kammerelementen KE1 bis KEn radial nach außen V-förmig aufweiten, wird auch zweckmäßigerweise die Wandstärke der Stützelemente SE1 bis sEn nach außen hin vergrößert, um möglichst den Leerraum auszufüllen und somit die filigranen Seitenwände der Kammerelemente KE1 bis KEn abzustützen, d.h. die Stützelemente SE1 - SEn füllen die Zwickel zwischen den Kammerelementen KE1 - KEn vorteilhaft weitgehend aus.

Die symmetrischen Ansätze der T-Träger-förmigen Stützelemente SE1 bis SEn erstrecken sich um den Umfang jeweils zweckmäßig bis in die Mitte des benachbarten Kammerelementes. Da es sich um eine symmetrische Anordnung von Kammerelementen KE1 bis KEn und Stützelementen SE1 bis SEn handelt, stoßen die Enden der Ansätze benachbarter Stützelemente SE1 bis SEn jeweils in der Mitte eines Kammerelementes KE1 bis KEn aneinander. Somit decken die Ansätze der Stützelemente SE1 - SEn die radial nach außen offenen Kammerelemente KE1 bis KEn um den Umfang nach außen hin ab und bilden eine geschlossene ringförmige Struktur (Stützring). Die Stützelemente SE1 bis SEn wirken T-Träger-ähnlich als Pfeilerelemente und bilden kavernenartige, querdruckbeständige Abdeckungen für die filigranen Kammerelemente KE1 bis KEn. Greift nun eine radial wirkende Kraft an den als Abdeckungen wirkenden Ansätzen ASL1 oder/und ASR1 des Stützelementes SE1 an, so kann diese nicht oder nur in geringem Umfang auf die benachbarten filigranen Kammerelemente KE1 und/oder KEn einwirken und diese schädigen. Gleichzeitig wirken die Ansätze der Stützelemente SE1 bis SEn wie Deckel für die radial nach außen offenen Kammerelemente KE1 bis KEn. Diese hindern die Bandstapel BS1 bis BSn in den Kammerelementen KE1 bis KEn daran, diese bei auftretenden Knick-, Biege-, Torsions-, und Druckbeanspruchungen zu verlassen. Die Ansätze weisen vorteilhaft eine Wandstärke zwischen 0,5 mm und 2 mm auf, um einen ausreichenden Schutz gegenüber Querdruckkräften zu gewährleisten.

Gegebenenfalls kann es für eine Stützpfeilerfunktion der Stützelemente SE1 - SEn bereits ausreichend sein, daß diese die Zwischenräume (Zwickel) zwischen den Kammerelementen KE1 - KEn nur teilweise ausfüllen. Zwischen jeweils zwei benachbarten Kammerelementen sind die Stützelemente SE1 - SEn also mit einem Freiraum zu beiden Seiten eingefügt. Die Stützelemente SE1 - SEn in den Zwischenräumen dienen dann in erster Linie als sich radial erstreckende Abstandshalter bzw. Stützpfeiler gegenüber radial wirkenden Kräften. Zu diesem Zweck ist für die Stützelemente SE1 - SEn vorteilhaft ein steifes, glattes Material gewählt. Vorteilhaft überragt diese Art von Stützelementen SE1 - SEn die Kammerelemente KE1 - KEn etwa um 0,5 - 1 mm. Zusammen mit ihrer Steifigkeit ist dadurch weitgehend, auch bei radial wirkenden Kräften, ein definierter Abstand zwischen den Kammerelementen KE1 - KEn und den als Abdeckung dienenden Ansätzen der Stützelemente SE1 - SEn oder einer zusätzlich außen aufgebrachten Abdeckschicht sichergestellt. Somit steht vorteilhaft ein freier Stauchraum als Sicherheitszone zur Verfügung. Um diese Art von Stützelementen SE1 - SEn am Verschieben oder Umkippen z.B. unmittelbar nach dem Aufseilen zu hindern, können die Stützelemente SE1 - SEn in ihrer Lage zweckmäßig fixiert werden. Dies kann insbesondere dadurch erfolgen, daß die Stützelemente SE1 - SEn auf das Kernelement ZKE geklebt werden oder in dort vorbereitete Vertiefungen gestellt werden. Auch ist es möglich, außen am Kernelement ZKE Nuten vorzusehen, in die die Stützelemente SE1 bis SEn mit ihren Fußbereichen eingreifen. Besonders vorteilhaft werden die Stützelemente SE1 - SEn am Umkippen durch die Stützringwirkung ihrer aneinanderstoßenden Ansätze gehindert, die eine geschlossene ringförmige Struktur bilden.

Die Stützelemente SE1 - SEn können vorteilhaft über ihren Querschnitt verteilt unterschiedliche mechanische Eigenschaften aufweisen. Beispielsweise können die Stützelemente SE1 - SEn jeweils im Inneren ihres radial verlaufenden Mittelteils (T-Träger-Fuß) aus sehr hartem, steifen Material bestehen, während die seitlichen, gegen die Kammerelemente KE1 - KEn gerichteten Wandungsteile aus einem weicheren Material bestehen und gegebenenfalls sogar polsternde Eigenschaften aufweisen können. Auch die Ansätze ASL1 - ASRn der Stützelemente SE1 - SEn können gegenüber dem radial verlaufenden Mittelteil der Stützelemente SE1 - SEn unterschiedliche mechanische Eigenschaften aufweisen. Weiterhin ist es möglich, im Inneren des radial verlaufenden Mittelteils (T-Trägerfuß) der Stützelemente SE1 - SEn und/oder in den Ansätzen ASL1 - ASRn strang- oder bandförmige Elemente mit gegenüber dem Mittelteil der Stützelemente und/oder den Ansätzen unterschiedlichen mechanischen Eigenschaften einzubetten. Beispielsweise können jeweils in der Mitte der radial verlaufenden Mittelteile der Stützelemente SE1 - SEn radial verlaufende Bänder aus härterem Material eingelagert werden, die eine Verbesserung der Stützfunktion ergeben. Vorteilhaft können auch bei den Ansätzen ASL1 - ASRn sich im wesentlichen in Umfangsrichtung erstreckende Bänder oder dergleichen eingebettet sein. Insgesamt gesehen können die Mittelteile der Stützelemente SE1 - SEn und/oder deren Ansätze ASL1 - ASRn innerhalb ihres Querschnittes oder auch in Bezug aufeinander unterschiedliche mechanische Eigenschaften aufweisen.

Zugleich bieten diese, zwischen den Kammerelementen KE1 bis KEn eingefügten, Stützelemente SE1 bis SEn auch einen gewissen Schutz gegenüber Querkräften, die quer zur radialen Erstreckung der Kammerelemente KE1 bis KEn an deren Seitenwände angreifen. Da die Stützelemente SE1 bis SEn jeweils zwischen den radial verlaufenden Außenwänden der Kammerelemente KE1 bis KEn eingelagert sind, werden diese Querkräfte zumindest in gewissem Umfang daran gehindert, direkt auf das benachbarte Kammerelement KE1 bis KEn einzuwirken. Sie werden weitgehend von den Stützelementen SE1 bis SEn absorbiert und an das Kernelement ZKE abgeleitet. Die Stützelemente SE1 bis SEn wirken also zwischen den relativ weichen, flexiblen und filigranen Seitenwänden der Kammerelemente KE1 bis KEn aufgrund ihres härteren und steiferen Materials wie Querträger und verleihen der ringförmigen Lage aus Kammerelementen KE1 bis KEn erst eine gewisse Steifigkeit und Stauchfestigkeit. Der Widerstand der Konstruktion gegenüber Querkräften wird gleichzeitig durch die um den Umfang gesehen aneinanderstoßenden Ansätze der Stützelemente SE1 bis SEn (Stützring) unterstützt. Die Ansätze der Stützelemente SE1 bis SEn fungieren also nicht nur als Abdeckungen der radial nach außen offenen Kammerelemente KE1 bis KEn gegenüber radial wirkenden Druckkräften, sondern verteilen Querdruckkräfte um den Umfang auf mehrere Stützelemente SE1 bis SEn (Stützring).

Gleichzeitig bildet die von den Ansätzen dieser Stützelemente SE1 bis SEn gebildete geschlossene Abdeckung um den Umfang eine ringförmige Zwischenschicht. Auf dieser kann für den Schutz gegen mechanische Beanspruchungen gegebenenfalls eine Bewehrung BW und/oder eine mehrschichtige Außenhülle AH angebracht werden.

Bei dieser Konstruktion ist somit die Stütz- und Tragfunktion im wesentlichen oder sogar allein den Stützelementen SE1 - SEn zugeordnet. Dagegen werden die Kammerelemente KE1 - KEn demgegenüber kaum mechanisch beansprucht und bilden selbständige, unabhängig hiervon herstellbare, einlegbare und auch im fertigen Zustand verschiebbare Elemente, die nur der einfachen Aufbewahrung der Bandstapel BS1 - BS11 dienen. Eine darüber hinausgehende tragende, oder stützende Funktion müssen sie nicht aufweisen.

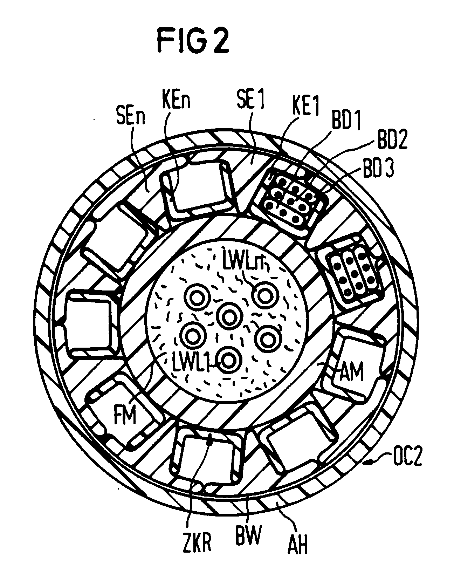

In Figur 2 ist in Abwandlung zu Figur 1 das Kernelement des optischen Kabels OC2 als Rohr ZKR ausgebildet. Die unverändert übernommenen Elemente sind mit den gleichen Bezugszeichen wie in Figur 1 versehen. Dieses Rohr ZKR wird von dem Außenmantel AM eines optischen Übertragungselements gebildet, das mehrere Lichtwellenleiter LW1 bis LWn vorzugsweise in einer Füllmasse FM eingeschlossen enthält. Um eine ausreichende Festigkeit der Konstruktion der Kabelseele sicherzustellen, weist der rohrförmige Außenmantel AM des Übertragungselements, das heißt also, das in Form eines Rohres ZKR ausgebildete Kernelement, eine ausreichende Dimensionierung auf. Vorteilhaft ist der Außenmantel AM mehrschichtig aufgebaut, wobei für ihn zweckmäßigerweise eine weiche Innenschicht und eine demgegenüber härtere Außenschicht vorgesehen sind. Auf diese Weise ist die Biegefähigkeit, Flexibilität und Elastizität des optischen Kabels OC1 bei auftretenden Biege-, Torsions-, Zug- und Druckbeanspruchungen ausreichend gewährleistet, so daß die Lichtwellenleiter LW1 bis LWn in seinem Zentrum unbeansprucht bleiben. Die härtere Außenschicht des Außenmantels AM hingegen verleiht der Konstruktion der Kabelseele erst die ausreichende Festigkeit gegenüber Querdruckkräften. Zweckmäßigerweise ist für die Außenschicht des Außenmantels AM ein etwas härteres PE-Mantelcompound, für die Innenschicht hingegen ein weicheres gewählt. Für Kabel, die in Gebäude eingeführt werden, ist unter Umständen eine flammwidrige Mantelmischung mit EVA, gegebenenfalls auch PVC oder PU gewählt.

Gegebenenfalls können in dem als Rohr ZKR ausgebildeten Kernelement anstelle der Lichtwellenleiter LW1 bis LWn auch konventionelle elektrische Leiter oder zugfeste Elemente, wie zum Beispiel Stahl- oder Aramiddrähte, eingebracht werden. Es ist aber auch möglich, dieses Rohr zum Beispiel für die Längsleitung von Druckgas für Uberwachungszwecke des optischen Kabels OC2 zu verwenden.

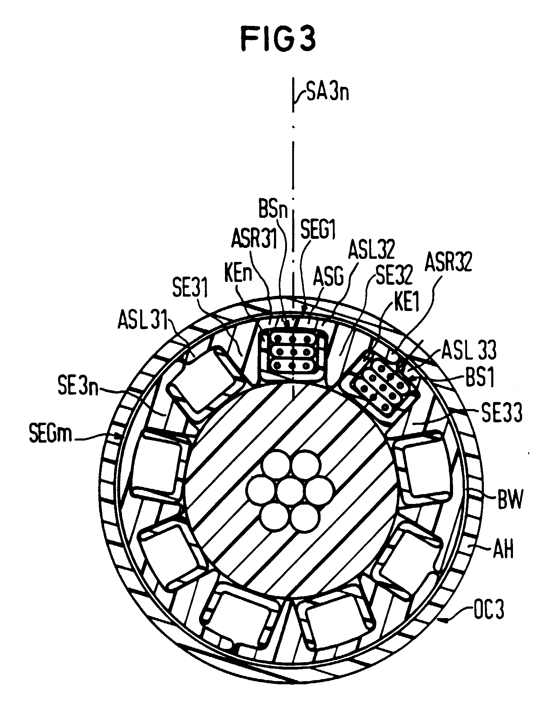

Figur 3 zeigt schematisch und vergrößert im Querschnitt ein optisches Kabel OC3 mit einer gegenüber Figur 1 modifizierten Form von Stützelementen SE31 bis SE3n. Unverändert übernommene Elemente aus Figur 1 sind mit den gleichen Bezugszeichen wie in Figur 1 versehen. Diese sind zwischen den ringförmig in einer Lage angeordneten Kammerelementen KE1 bis KEn (ebenso aufgebaut wie in Figur 1 und 2) von außen eingefügt und zwischen diesen eingelagert.

Jeweils einer der beiden symmetrischen Ansätze eines Stützelementes nach Figur 1 wird mit jeweils einem Ansatz eines benachbarten Stützelementes zu einem Brückenglied verbunden. Beispielhaft sind in der Figur 3 der Ansatz ASR31 des Stützelements SE31 und der Ansatz ASL32 des Stützelements SE32 zu einem durchgehenden Brückenglied ASG zusammengefaßt. Auf diese Weise entsteht ein neues zweigliedriges Stützelement SEG1. Es weist im Mittelteil einen U-förmigen Querschnitt und außen jeweils einen Ansatz ASL31 und ASR32 auf. Diese zweigliedrigen Stützelemente SEG1 bis SEGm mit m = n/2 umfassen jeweils schachtelartig ein Kammerelement KE1 bis KEn, bzw. umstülpen dieses. Auf diese Weise erreicht man, daß sich die Anzahl der Stoßstellen der Ansätze im Vergleich zu Figur 1 halbiert.

Wirkt zum Beispiel eine radiale Druckkraft entlang der Symme- trieebene SA3n des Kamerelements KEn, so schirmt das durchgehende Brückenglied ASG den Bandstapel BSn im Kammerelement KEn vor dieser Radialkraft ab.

Bei den in den Figuren 1 - 3 dargestellten Stützelementen ist gewährleistet, daß auch bei schräg angreifenden Belastungen ein Kippen dieser Stützelemente weitgehend vermieden ist.

Es ist auch möglich, mehr als zwei Stützelemente zu einem vielgliedrigen Stützelement zusammenzufassen. Beispielsweise können drei Stützelemente SE31 bis SE33 durch zwei gemeinsame Brückenglieder analog ASG zu einem dreigliedrigen Stützelement verbunden werden. (z.B. können die Ansätze ASR31 und ASL32 der Stützelemente SE31 und SE32 und die Ansätze ASR32 und ASL33 der Stützelemente SE32 und SE33 zusammengefaßt werden.) Dadurch kann die Schutzwirkung der Abdeckung weiter verbessert werden.

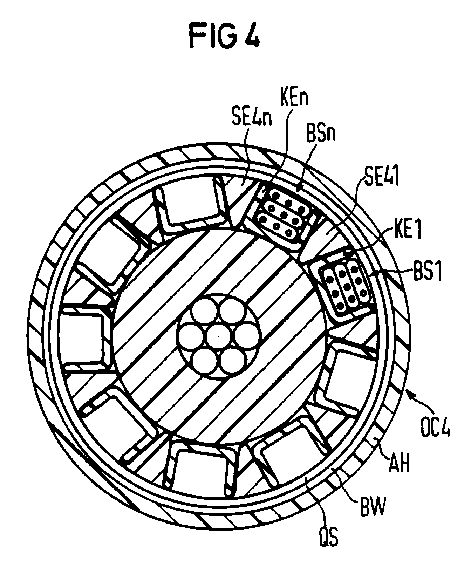

Figur 4 zeigt ein optisches Kabel 0C4, das im Aufbau dem des erfindungsgemäßen optischen Kabels OC1 entspricht, aber veränderte Stützelemente SE41 bis SE4n aufweist. Aus Figur 1 unverändert übernommene Elemente erhalten die gleichen Bezugszeichen wie in Figur 1. Die Stützelemente SE41 bis SE4n füllen die Zwickel zwischen den Kammerelementen KE1 bis KEn praktisch vollständig aus, haben also etwa keilförmigen Querschnitt. Die Außenwände der Stützelemente SE41 bis SE4n liegen also an den Außenwänden der benachbarten Kammerelemente (KE1 bis KEn) in ihrer vollen Länge an. Auf diese Weise ergibt sich eine optimale Abstützung der filigranen Seitenwände der Kammerelemente KE1 bis KEn. Diese Variante bietet den Vorteil, daß die Stützelemente SE41 bis SE4n besonders einfach in die Zwischenräume, das heißt Zwickeln, der Kammerelemente KE1 bis KEn von außen eingebracht werden können.

Zweckmäßigerweise werden die radial nach außen offenen Kammerelemente KE1 bis KEn durch eine querdruckfeste Außenschicht QS abgedeckt. Diese Schicht QS entspricht dann etwa dem Brückenglied ASG nach Figur 3. Es kann zweckmäßig sein, diese Außenschicht QS mit den Stützelementen SE41 bis SE4n zu verbinden, z.B. durch eine zwischengefügte Schmelzkleberschicht, um die Bändchenstapel BS1 bis BSn in den Kammerelementen KE1 bis KEn bei Beanspruchungen zu halten. Als Materialien für die Stützelemente SE41 bis SE4n sind zweckmäßig die gleichen Materialien wie bei Figur 1 erläutert zu wählen.

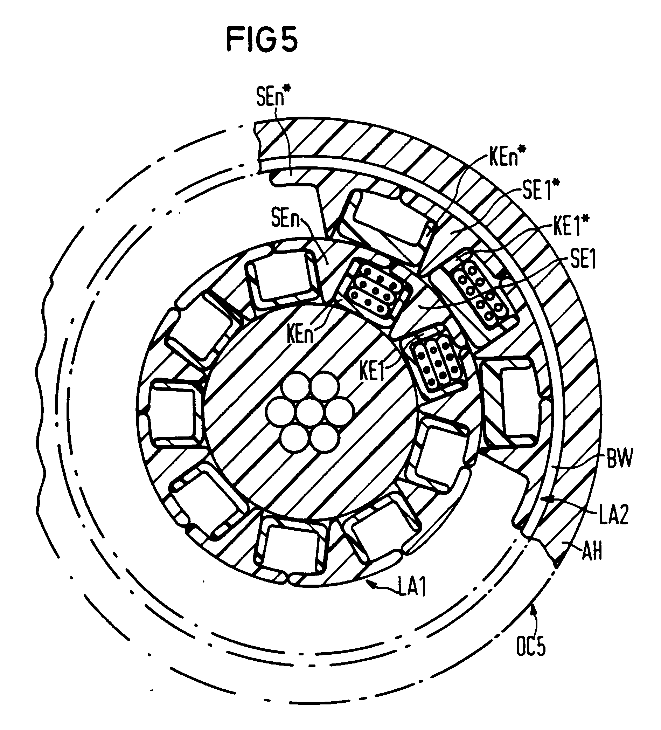

Figur 5 zeigt ein zweilagig aufgebautes optisches Kabel OC5. Dessen Kabelseele weist eine analog zur Figur 1 identische innere Lage LA1 auf. Unverän dert übernommene Elemente sind mit den gleichen Bezugszeichen versehen. Auf dieser ersten inneren Lage LA1 ist eine hinsichtlich Stützelemente SE1* bis SEn* und Kammerelemente KE1* bis KEn* gleichwertig aufgebaute Verseillage LA2 aufgebracht. Da der Durchmesser der zweiten Lage LA2 größer als der Durchmesser der inneren Lage LA1 ist, können in der äußeren Lage LA2 Kammerelemente KE1* bis KEn* verwendet werden, die im Querschnitt größer gewählt sind als die Kammerelemente KE1 - KEn der inneren Lage LA1. Ebenso können die Stützelemente SE1* - SEn* entsprechend größer gewählt werden als die (SE1 - SEn) der inneren Lage LA1.

Mehrlagige Anordnungen werden zweckmäßig im Gegenschlag verseilt, wodurch eine gesicherte, fortlaufende Abstützung der Stützelemente der verschiedenen Lagen gewährleistet wird. Hierbei wirkt sich besonders positiv aus, daß bei den mit Ansätzen versehenen Stützelementen auch eine deutliche Vergleichmäßigung (Verteilung auf größere Unterlage) von radialen Druckbelastungen erreicht wird.

Zweckmäßigerweise kann zwischen den beiden Lagen LA1 und LA2 eine Zwischenschicht als zusätzliche Decke zum Schutz gegen Stauchungen der inneren Lage LA1 eingezogen werden.

Zweckmäßigerweise können für unterschiedliche Durchmesser von Lagen aus Kammerelementen auch unterschiedliche Stützelemente, die ein- oder mehrgliedrig ausgebildet sind, verwendet werden. So können zum Beispiel in der ersten Lage LA1 T-Träger-förmige, eingliedrige Stützelemente analog zu Figur 1 und in der zweiten Verseillage LA2 zweigliedrige, U-förmige Stützelemente nach Figur 3 zwischen den Kammerelementen eingefügt sein.

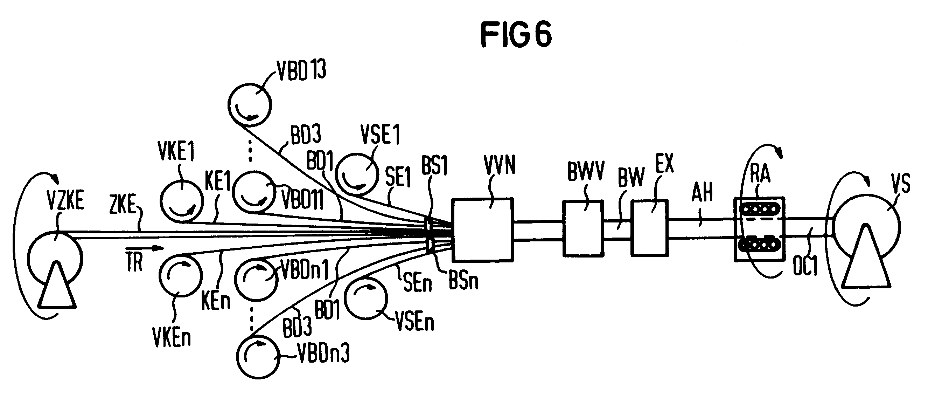

In Figur 6 ist dargestellt, wie ein optisches Kabel OC1 nach Figur 1 hergestellt werden kann. Von einer rotierenden Vorratsspule VZKE wird das zentrale Kernelement ZKE nach rechts entsprechend dem Pfeil TR abgezogen. Für das ringförmige Aufseilen von Kammerelementen KE1 bis KEn auf das zentrale Kernelement ZKE sind deren Vorratsspulen VKE1 bis VKEn rotationssymmetrisch und feststehend um die Längsachse des zentralen Kernelements ZKE angeordnet. Von diesen Vorratsspulen VKE1 bis VKEn werden die Kammerelemente KE1 bis KEn einem gemeinsamen Verseilpunkt in einer Vorrichtung VVN (,die analog zu einem Verseilnippel ausgebildet ist,) zugeführt. Gleichzeitig werden in einer feststehenden ringförmigen Anordnung um die Längsachse des zentralen Kernelementes ZKE von Vorratsspulen (VBD11 bis VBD13) bis (VBDn1 - VBDn3) jeweils Lichtwellenleiter-Bandleitungen BD1 bis BD3 abgezogen. Diese werden jeweils zu rechteckförmigen Bandstapeln BS1 bis BSn kurz vor dem Verseilpunkt der Vorrichtung VVN zusammengefaßt und unmittelbar während des Aufseilens der Kammerelemente KE1 bis KEn in diese eingelegt. Simultan zum Aufseilvorgang der Kammerelemente KE1 bis KEn werden in einer nachfolgenden dritten rotationssymmetrischen und feststehenden Anordnung von Vorratsspulen VSE1 bis VSEn die Stützelemente SE1 bis SEn abgespult und ebenfalls dem gemeinsamen Verseilpunkt in der Vorrichtung VVN zugeführt. Die Stützelemente SE1 - SEn werden zwischen die Zwickel der Kammerelemente KE1 bis KEn von außen eingeführt. Auf dieser Lage aus Kammerelementen KE1 bis KEn und auf den dazwischen eingelagerten Stützelementen SE1 bis SEn kann eine Bewehrung BW (z.B. aus zugfesten Elementen wie Glas- oder Aramidfasern) mit einer Vorrichtung BWV zum zusätzlichen mechanischen Schutz gegen Zug-, Biege- und Torsionsbeanspruchungen aufgebracht werden. Schließlich wird die mit der Bewehrung BW versehene Lage aus Kammerelementen KE1 bis KEn und den dazwischen eingefügten Stützelementen SE1 bis SEn in die Durchgangsbohrung eines Extruderkopfes eines Extruders EX eingefahren, um eine gegebenenfalls mehrschichtige Außenhülle AH aufzubringen. Ein nachfolgender rotierender Raupenabzug RA umfaßt das so hergestellte optische Kabel OC1 formschlüssig und führt dieses einer rotierenden Aufwickeltrommel VS zu. Der Raupenabzug RA dient also dem Zweck, sowohl das zentrale Kernelement ZKE von seiner Vorratsspule VZKE, als auch die Verseilelemente wie die Kammerelemente KE1 bis KEn, jeweils die Lichtwellenleiter-Bandleitungen BD1 bis BD3 und die Stützelemente SE1 bis SEn von ihren Vorratsspulen abzuziehen und ihrem gemeinsamen Verseilpunkt in der Vorrichtung VVN zuzuführen. Um eine Torsion des zentralen Kernelements ZKE zu verhindern, rotieren die Trommeln VZKE und VS, sowie der Raupenabzug RA synchron und gleichsinnig, d.h. die Kammerelemente KE1 bis KEn mit den dazwischen einzufügenden Stützelementen werden vorzugsweise im Gleichschlag verseilt.

Gegebenenfalls können die Kammerelemente KE1 bis KEn mit den dazwischen einzufügenden Stützelementen SE1 bis SEn auch SZverseilt werden. Dann stehen z.B. die beiden Vorratsspulen VZKE und VS fest, während das Zentralelement ZKE bzw. die Kabelseele auf einer Verseilstrecke zwischen einem ersten, RA entsprechenden zusätzlichen Raupenabzug vor dem Verseilpunkt und dem Raupenabzug RA mit wechselnder Schlagrichtung rotiert. Vorteilhaft rotieren diese beiden RauOenabzüge etwa synchron. Der zusätzliche Raupenabzug ist zugunsten der Übersichtlichkeit in Figur 6 weggelassen worden.

Anstelle der Vorratsspulen VSE1 - VSEn kann bei Einsatz entsprechender Kühleinrichtungen auch ein Extruder mit einer Vielfachdüse vorgesehen sein, wobei die Düsenöffnungen dem Profil der Stützelemente SE1 bis SEn entsprechen.

## Patentansprüche

1. Optisches Kabel (OC1) mit selbständigen Kammerelementen (KE1 bis KEn), die in mindestens einer Lage ringförmig um die Kabelachse angeordnet sind und zur Aufnahme von Lichtwellenleitern (LW1 bis LW3) dienen,
**dadurch gekennzeichnet,**
daß zwischen den selbständigen Kammerelementen (KE1 bis KEn) Stützelemente (SE1 bis SEn) vorgesehen sind, daß die Stützelemente (SE1 bis SEn) im wesentlichen bezogen auf die Kabelachse radial verlaufend angeordnet sind, und daß die radiale Erstreckung der Stützelemente (SE1 bis SEn) mindestens gleich der radialen Erstreckung der selbständigen Kammerelemente (KE1 bis KEn) gewählt ist.

2. Optisches Kabel nach Anspruch 1,
**dadurch gekennzeichnet,**
daß die Lage aus Kammerelementen (KE1 bis KEn) und die Stützelemente (SE1 bis SEn) ringförmig um ein Kernelement (ZKE) angeordnet sind.

3. Optisches Kabel nach Anspruch 2,
**dadurch gekennzeichnet,**
daß das Kernelement (ZKE) mindestens ein zugfestes Element (CE) aufweist.

4. Optisches Kabel nach Anspruch 3,
**dadurch gekennzeichnet,**
daß auf dem zugfesten Element (CE) eine Aufdickungsschicht (AS) aufgebracht ist.

5. Optisches Kabel nach einem der vorhergehenden Ansprüche 2-4,
**dadurch gekennzeichnet,**
daß das Kernelement als Rohr (ZKR) ausgebildet ist.

6. Optisches Kabel nach Anspruch 5,
**dadurch gekennzeichnet,**
daß im Rohr (ZKR) mindestens ein Lichtwellenleiter (LWL1 - LWLn) angeordnet ist.

7. Optisches Kabel nach einem der vorhergehenden Ansprüche,
**dadurch gekennzeichnet,**
daß die Kammerelemente (KE1 bis KEn) im Querschnitt ein U-förmiges Profil aufweisen.

8. Optisches Kabel nach einem der vorhergehenden Ansprüche,
**dadurch gekennzeichnet,**
daß die Kammerelemente (KE1 bis KEn) etwa rechteckförmige Kammeröffnungen für die Aufnahme der Lichtwellenleiter (LW1 - LW3) aufweisen.

9. Optisches Kabel nach einem der vorhergehenden Ansprüche,
**dadurch gekennzeichnet,**
daß die die Kammeröffnungen bildenden offenen Seiten der Kammerelemente (KE1 - KEn) bezogen auf die Kabelachse radial nach außen gerichtet sind.

10. Optisches Kabel nach einem der vorhergehenden Ansprüche,
**dadurch gekennzeichnet,**
daß in die Kammerelemente (KE1 bis KEn) mindestens eine Lichtwellenleiter-Bandleitung (BD1 - BD3) eingelegt ist.

11. Optisches Kabel nach Anspruch 10,
**dadurch gekennzeichnet,**
daß ein Stapel (BS1 bis BSn) aus mehreren Lichtwellenleiter-Bandleitungen (BD1 - BD3) in die Kammerelemente (KE1 - KEn) eingelegt ist.

12. Optisches Kabel nach einem der vorhergehenden Ansprüche,
**dadurch gekennzeichnet,**
daß für die Kammerelemente (KE1 bis KEn) bezogen auf die Kabelachse eine radiale Erstreckung von mindestens 1 mm, bevorzugt zwischen 3 und 10 mm, und eine Erstreckung längs des Umfangs von mindestens 2 mm, bevorzugt zwischen 3 und 10 mm, gewählt ist.

13. Optisches Kabel nach einem der vorhergehenden Ansprüche,
**dadurch gekennzeichnet,**
daß die Wandstärke der Kammerelemente (KE1 - KEn) zwischen 0,3 mm und 1 mm gewählt ist.

14. Optisches Kabel nach einem der vorhergehenden Ansprüche,
**dadurch gekennzeichnet,**
daß die radiale Erstreckung der Stützelemente (SE1 bis SEn) bezüglich der Kabelachse wesentlich größer als ihre Wandstärke gewählt ist.

15. Optisches Kabel nach einem der vorhergehenden Ansprüche,
**dadurch gekennzeichnet,**
daß die Stützelemente (SE1 bis SEn) eine wesentlich kleinere Wandbreite als die Erstreckung der Kammerelemente (KE1 bis KEn) in Umfangsrichtung aufweisen.

16. Optisches Kabel nach einem der vorhergehenden Ansprüche,
**dadurch gekennzeichnet,**
daß die radiale Erstreckung der Stützelemente (SE1 bis SEn) bezüglich der Kabelachse größer als die radiale Erstreckung der Kammerelemente (KE1 bis KEn) gewählt ist.

17. Optisches Kabel nach einem der vorhergehenden Ansprüche,
**dadurch gekennzeichnet,**
daß die Wandstärke der Stützelemente (SE1 bis SEn) zwischen 0,5 mm und 2 mm gewählt ist.

18. Optisches Kabel nach einem der vorhergehenden Ansprüche,
**dadurch gekennzeichnet,**
daß die Außenwände der Stützelemente (SE1 bis SEn) die Außenwände der benachbarten Kammerelemente (KE1 bis KEn) berühren.

19. Optisches Kabel nach Anspruch 18,
**dadurch gekennzeichnet,**
daß die Außenwände der Stützelemente (SE1 bis SEn) an den Außenwänden der benachbarten Kammerelemente (KE1 bis KEn) in ihrer vollen Länge anliegen.

20. Optisches Kabel nach einem der vorhergehenden Ansprüche,
**dadurch gekennzeichnet,**
daß die Wandstärke der Stützelemente (SE1 bis SEn) nach außen zunimmt.

21. Optisches Kabel nach einem der Ansprüche 19 oder 20,
**dadurch gekennzeichnet,**
daß die Stützelemente (SE1 bis SEn) die Zwickel zwischen den Kammerelementen (KE1 bis KEn) weitgehend ausfüllen.

22. Optisches Kabel nach einem der Ansprüche 1 bis 17,
**dadurch gekennzeichnet,**
daß die Stützelemente (SE1 - SEn) die Zwickel zwischen den Kammerelementen (KE1 bis KEn) nur teilweise ausfüllen.

23. Optisches Kabel nach einem der vorhergehenden Ansprüche,
**dadurch gekennzeichnet,**
daß für die Stützelemente (SE1 bis SEn) ein härteres Material verwendet ist als für die Kammerelemente (KE1 bis KEn).

24. Optisches Kabel nach einem der vorhergehenden Ansprüche,
**dadurch gekennzeichnet,**
daß an den Stützelementen (SE1 bis SEn) jeweils zumindest ein quer verlaufender Ansatz (ASL1 - ASRn) vorgesehen ist.

25. Optisches Kabel nach Anspruch 24,
**dadurch gekennzeichnet,**
daß an den Stützelementen (SE1 bis SEn) jeweils zwei in entgegengesetzte Richtungen verlaufende Ansätze (ASL1 - ASRn) vorgesehen sind.

26. Optisches Kabel nach einem der Ansprüche 24 oder 25,
**dadurch gekennzeichnet,**
daß die Ansätze (ASL1 - ASRn) symmetrisch bezüglich der hinsichtlich der Kabel achse radialen Erstreckung der Stützelemente (SE1 - SEn) angeordnet sind.

27. Optisches Kabel nach einem der Ansprüche 24 bis 26,
**dadurch gekennzeichnet,**
daß die Erstreckung der Ansätze (ASL1 - ASRn) so gewählt ist, daß die Öffnungen der Kammerelemente (KE1 bis KEn). abgedeckt sind.

28. Optisches Kabel nach einem der Ansprüche 24 bis 27,
**dadurch gekennzeichnet,**
daß mindestens zwei Ansätze (ASR31, ASL32) ein durchgehendes Brückenglied (ASG) bilden (Figur 3).

29. Optisches Kabel nach einem der Ansprüche 24 bis 28,
**dadurch gekennzeichnet,**
daß in Umfangsrichtung gesehen die Ansätze (ASL1 - ASRn) aneinander stoßen.

30. Optisches Kabel nach einem der Ansprüche 24 bis 29,
**dadurch gekennzeichnet,**
daß die Wandstärke der Ansätze (ASL1 - ASRn) zwischen 0,5 mm und 2 mm gewählt ist.

31. Optisches Kabel nach einem der vorhergehenden Ansprüche,
**dadurch gekennzeichnet,**
daß mehrere Lagen (LA1, LA2) aus Kammerelementen (KE1 bis KEn, KEI* bis KEn*) und Stützelementen (SE1 bis SEn, SEI* bis SEn*) vorgesehen sind. (Figur 5).

32. Optisches Kabel nach Anspruch 31,
**dadurch gekennzeichnet,**
daß jeweils auf einer Lage (LA1, LA2) aus Kammerelementen (KE1 bis KEn, KEI* bis KEn*) und Stützelementen (SE1 bis SEn, SE1* bis SEn*) eine Zwischenschicht aufgebracht ist.

33. Optisches Kabel nach einem der Ansprüche 31 oder 32,
**dadurch gekennzeichnet,**
daß die Stützelemente (SE1 bis SEn) in den verschiedenen Lagen (LA1, LA2) unterschiedlich ausgebildet sind.

34. Optisches Kabel nach einem der vorhergehenden Ansprüche,
**dadurch gekennzeichnet,**
daß außen mindestens eine Außenhülle (AH) und/oder mindestens eine Bewehrung (BW) vorgesehen ist.

35. Optisches Kabel nach einem der vorhergehenden Ansprüche,
**dadurch gekennzeichnet,**
daß die bezüglich der Kabelachse sich radial erstreckenden Mittelteile der Stützelemente (SE1 - SEn) und/oder die Ansätze (ASL1 - ASRn) innerhalb ihres Querschnittes oder in Bezug aufeinander unterschiedliche mechanische Eigenschaften aufweisen.

36. Optisches Kabel nach einem der vorhergehenden Ansprüche 2-35,
**dadurch gekennzeichnet,**
daß die Stützelemente (SE1 - SEn) in ihren Fußbereichen mit dem Kernelement (ZKE) eine Fixierung aufweisen.

37. Verfahren zur Herstellung eines optischen Kabels (OC1) nach einem der vorhergehenden Ansprüche,
**dadurch gekennzeichnet,**
daß die selbständigen Kammerelemente (KE1 bis KEn) in mindestens einer Verseillage ringförmig um die Kabelachse angeordnet werden, und daß die Stützelemente (SE1 bis SEn) zwischen den Kammerelementen (KE1 bis KEn) bezogen auf die Kabelachse radial verlaufend von außen eingefügt werden.

38. Verfahren nach Anspruch 37,
**dadurch gekennzeichnet,**
daß durch Extrusion außen mindestens eine Außenhülle (AH) und/oder eine Bewehrung (BW) aufgebracht wird.

39. Verfahren nach einem der Ansprüche 37 oder 38,
**dadurch gekennzeichnet,**
daß nach dem Anordnen der Kammerelemente (KE1 bis KEn) die Lichtwellenleiter-Bandleitungen (BD1 bis BD3) als Stapel (BS1 - BSn) in diese eingebracht werden, und daß anschließend durch Aufbringen der mit Ansätzen (ASL1 - ASRn) versehenen Stützelemente (SE1 - SEn) die Kammerelemente (KE1 bis KEn) verschlossen werden.

## Claims

1. Optical cable (OC1) having independent chamber elements (KE1 to KEn) which are disposed annularly in at least one layer around the cable axis and which serve to receive optical waveguides (LW1 to LW3), characterized in that supporting elements (SE1 to SEn) are provided between the independent chamber elements (KE1 to KEn), in that the supporting elements (SE1 to SEn) are disposed to extend substantially radially with respect to the cable axis, and in that the radial extent of the supporting elements (SE1 to SEn) is selected to be at least equal to the radial extent of the independent chamber elements (KE1 to KEn).

2. Optical cable according to Claim 1, characterized in that the layer of chamber elements (KE1 to KEn) and the supporting elements (SE1 to SEn) are disposed annularly about a core member element (ZKE).

3. Optical cable according to Claim 2, characterized in that the core member element (ZKE) exhibits at least one tensile element (CE).

4. Optical cable according to Claim 3, characterized in that a thickening layer (AS) is applied to the tensile element (CE).

5. Optical cable according to one of the preceding Claims 2-4, characterized in that the core member element is designed as a tube (ZKR).

6. Optical cable according to Claim 5, characterized in that at least one optical waveguide (LWL1 - LWLn) is disposed in the tube (ZKR).

7. Optical cable according to one of the preceding claims, characterized in that the chamber elements (KE1 to KEn) exhibit a U-shaped profile in cross-section.

8. Optical cable according to one of the preceding claims, characterized in that the chamber elements (KE1 to KEn) exhibit approximately rectangular chamber openings to receive the optical waveguides (LW1 - LW3).

9. Optical cable according to one of the preceding claims, characterized in that the sides of the chamber elements (KE1 - KEn) which are open and form the chamber openings are directed radially outwardly with respect to the cable axis.

10. Optical cable according to one of the preceding claims, characterized in that at least one optical waveguide strip line (BD1 - BD3) is inserted into the chamber elements (KE1 to KEn).

11. Optical cable according to Claim 10, characterized in that a stack (BS1 to BSn) of a plurality of optical waveguide strip lines (BD1 - BD3) is inserted into the chamber elements (KE1 - KEn).

12. Optical cable according to one of the preceding claims, characterized in that for the chamber elements (KE1 to KEn) a radial extent, with respect to the cable axis, of at least 1 mm, preferably between 3 and 10 mm, is selected and an extent along the circumference of at least 2 mm, preferably between 3 and 10 mm, is selected.

13. Optical cable according to one of the preceding claims, characterized in that the wall thickness of the chamber elements (KE1 - KEn) is selected to be between 0.3 mm and 1 mm.

14. Optical cable according to one of the preceding claims, characterized in that the radial extent of the supporting elements (SE1 to SEn), with respect to the cable axis, is selected to be substantially greater than their wall thickness.

15. Optical cable according to one of the preceding claims, characterized in that the supporting elements (SE1 to SEn) exhibit a substantially smaller wall width than the extent of the chamber elements (KE1 to KEn) in the circumferential direction.

16. Optical cable according to one of the preceding claims, characterized in that the radial extent of the supporting elements (SE1 to SEn), with respect to the cable axis, is selected to be greater than the radial extent of the chamber elements (KE1 to KEn).

17. Optical cable according to one of the preceding claims, characterized in that the wall thickness of the supporting elements (SE1 to SEn) is selected to be between 0.5 mm and 2 mm.

18. Optical cable according to one of the preceding claims, characterized in that the outer walls of the supporting elements (SE1 to SEn) touch the outer walls of the adjacent chamber elements (RE1 to KEn).

19. Optical cable according to Claim 18, characterized in that the outer walls of the supporting elements (SE1 to SEn) rest against the outer walls of the adjacent chamber elements (KE1 to KEn) in their full length.

20. Optical cable according to one of the preceding claims, characterized in that the wall thickness of the supporting elements (SE1 to SEn) increases in an outward direction.

21. Optical cable according to one of Claims 19 or 20, characterized in that the supporting elements (SE1 to SEn) fill out to a large extent the fillers between the chamber elements (KE1 to KEn).

22. Optical cable according to one of Claims 1 to 17, characterized in that the supporting elements (SE1 - SEn) fill out only partially the fillers between the chamber elements (KE1 to KEn).

23. Optical cable according to one of the preceding claims, characterized in that for the supporting elements (SE1 to SEn) a harder material is used than for the chamber elements (KE1 to KEn).

24. Optical cable according to one of the preceding claims, characterized in that at the supporting elements (SE1 to SEn) in each instance at least one transversely extending projection (ASL1 - ASRn) is provided.

25. Optical cable according to Claim 24, characterized in that at the supporting elements (SE1 to SEn) in each instance two projections (ASL1 - ASRn) extending in opposite directions are provided.

26. Optical cable according to one of Claims 24 or 25, characterized in that the projections (ASL1 - ASRn) are disposed symmetrically with respect to the radial extent, as regards the cable axis, of the supporting elements (SE1 - SEn).

27. Optical cable according to one of Claims 24 to 26, characterized in that the extent of the projections (ASL1 - ASRn) is selected such that the openings of the chamber elements (KE1 to KEn) are covered over.

28. Optical cable according to one of Claims 24 to 27, characterized in that at least two projections (ASR31, ASL32) form a continuous bridge component (ASG) (Figure 3).

29. Optical cable according to one of Claims 24 to 28, characterized in that the projections (ASL1 - ASRn) abut one another, seen in the circumferential direction.

30. Optical cable according to one of Claims 24 to 29, characterized in that the wall thickness of the projections (ASL1 - ASRn) is selected to be between 0.5 mm and 2 mm.

31. Optical cable according to one of the preceding claims, characterized in that a plurality of layers (LA1, LA2) of chamber elements (KE1 to KEn, KEI* to KEn*) and supporting elements (SET to SEn, SET* to SEn*) are provided (Figure 5).

32. Optical cable according to Claim 31, characterized in that an intermediate layer is applied in each instance on a layer (LA1, LA2) of chamber elements (KE1 to KEn, KE1* to KEn*) and supporting elements (SE1 to SEn, SE1* to SEn*).

33. Optical cable according to one of Claims 31 or 32, characterized in that the supporting elements (SE1 to SEn) are designed differently in the various layers (LA1, LA2).

34. Optical cable according to one of the preceding claims, characterized in that externally at least one outer jacket (AH) and/or at least one armoring (BW) is provided.

35. Optical cable according to one of the preceding claims, characterized in that the, with respect to the cable axis, radially extending middle parts of the supporting elements (SE1 - SEn) and/or the projections (ASL1 - ASRn) exhibit differing mechanical properties within their cross-section or with respect to one another.

36. Optical cable according to one of the preceding Claims 2-35, characterized in that the supporting elements (SE1 - SEn) exhibit a fixing with the core member element (ZKE) in their foot regions.

37. Process for the manufacture of an optical cable (OC1) according to one of the preceding claims, characterized in that the independent chamber elements (KE1 to KEn) are disposed annularly in at least one stranding layer around the cable axis, and in that the supporting elements (SE1 to SEn) are inserted from outside extending radially, with respect to the cable axis, between the chamber elements (KE1 to KEn).

38. Process according to Claim 37, characterized in that at least one outer jacket (AH) and/or an armoring (BW) is applied externally by extrusion.

39. Process according to one of Claims 37 or 38, characterized in that after the arranging of the chamber elements (KE1 to KEn) the optical waveguide strip lines (BD1 to BD3) are inserted into the latter as a stack (BS1 - BSn), and in that subsequently the chamber elements (KE1 to KEn) are closed by application of the supporting elements (SE1 - SEn) provided with projections (ASL1 - ASRn).

## Revendications

1. Câble optique (OC1) comportant des éléments de chambre (KE1 à KEn) indépendants qui sont disposés de façon annulaire en au moins une couche autour de l'axe du câble, et qui servent à recevoir des guides d'ondes lumineuses (LW1 à LW3),
caractérisé par le fait que des éléments d'appui (SE1 à SEn) sont prévus entre les éléments de chambre (KE1 à KEn) indépendants, que par rapport à l'axe du câble les éléments d'appui (SE1 à SEn) sont pour l'essentiel disposés en s'étendant radialement, et que l'étendue radiale des éléments d'appui (SE1 à SEn) est choisie de façon à être au moins égale à l'étendue radiale des éléments de chambre (KE1 à KEn) indépendants.

2. Câble optique selon la revendication 1,
caractérisé par le fait que la couche constituée des éléments de chambre (KE1 à KEn) et les éléments d'appui (SE1 à SEn) sont disposés de façon annulaire autour d'un élément de coeur (ZKE).

3. Câble optique selon la revendication 2,
caractérisé par le fait que l'élément de coeur (ZKE) comporte au moins un élément (CE) de résistance à la traction.

4. Câble optique selon la revendication 3,
caractérisé par le fait qu'une couche d'épaississement (AS) est appliquée sur l'élément (CE) de résistance à la traction.

5. Câble optique selon l'une quelconque des revendications précédentes,
caractérisé par le fait que l'élément de noyau est réalisé sous la forme d'un tube (ZKR).

6. Câble optique selon la revendication 5,
caractérisé par le fait qu'au moins un guide d'ondes lumineuses (LWL1 à LWLn) est disposé dans le tube (ZKR).

7. Câble optique selon l'une quelconque des revendications précédentes,
caractérisé par le fait que la section transversale des éléments de chambre (KE1 à KEn) présente un profil en forme de U.

8. Câble optique selon l'une quelconque des revendications précédentes,
caractérisé par le fait que les éléments de chambre (KE1 à KEn) comportent des ouvertures de chambre de forme approximativement rectangulaire qui sont destinées à la réception des guides d'ondes lumineuses (LW1 à LW3).

9. Câble optique selon l'une quelconque des revendications précédentes,
caractérisé par le fait que par rapport à l'axe du câble les côtés ouverts des éléments de chambre (KE1 à KEn) constituant les ouvertures de chambre sont orientés radialement vers l'extérieur.

10. Câble optique selon l'une quelconque des revendications précédentes,
caractérisé par le fait qu'au moins un guide de bande (BD1 à BD3) de guides d'ondes lumineuses est inséré dans les éléments de chambre (KE1 à KEn).

11. Câble optique selon la revendication 10,
caractérisé par le fait qu'un empilage (BS1 à BSn) constitué de plusieurs guides de bandes (BD1 à BD3) de guides d'ondes lumineuses est inséré dans les éléments de chambre (KE1 à KEn).

12. Câble optique selon l'une quelconque des revendications précédentes,
caractérisé par le fait que, rapporté à l'axe du câble, on choisit pour les éléments de chambre (KE1 à KEn) une étendue radiale d'au moins 1 mm, de préférence comprise entre 3 et 10 mm, et une étendue le long de la circonférence d'au moins 2 mm, de préférence comprise entre 3 et 10 mm.

13. Câble optique selon l'une quelconque des revendications précédentes,
caractérisé par le fait que l'épaisseur de paroi des éléments de chambre (KE1 à KEn) est choisie entre 0,3 mm et 1 mm.

14. Câble optique selon l'une quelconque des revendications précédentes,
caractérisé par le fait que par rapport à l'axe du câble l'étendue radiale des éléments d'appui (SE1 à SEn) est choisie de façon à être nettement supérieure à leur épaisseur de paroi.

15. Câble optique selon l'une quelconque des revendications précédentes,
caractérisé par le fait que les éléments d'appui (SE1 à SEn) ont une largeur de paroi nettement inférieure à l'étendue des éléments de chambre (KE1 à KEn) en direction circonférentielle.

16. Câble optique selon l'une quelconque des revendications précédentes,
caractérisé par le fait que par rapport à l'axe du câble l'étendue radiale des éléments d'appui (SE1 à SEn) est choisie de façon à être supérieure à l'étendue radiale des éléments de chambre (KE1 à KEn).

17. Câble optique selon l'une quelconque des revendications précédentes,
caractérisé par le fait que l'épaisseur de paroi des éléments d'appui (SE1 à SEn) est choisie entre 0,5 mm et 2 mm.

18. Câble optique selon l'une quelconque des revendications précédentes,
caractérisé par le fait que les parois extérieures des éléments d'appui (SE1 à SEn) touchent les parois extérieures des éléments de chambre (KE1 à KEn) voisins.

19. Câble optique selon la revendication 18,
caractérisé par le fait que les parois extérieures des éléments d'appui (SE1 à SEn) prennent appui sur l'ensemble de leur longueur sur les parois extérieures des éléments de chambre (KE1 à KEn) voisins.

20. Câble optique selon l'une quelconque des revendications précédentes,
caractérisé par le fait que l'épaisseur de paroi des éléments d'appui (SE1 à SEn) augmente vers l'extérieur.

21. Câble optique selon l'une des revendications 19 ou 20,
caractérisé par le fait que les éléments d'appui (SE1 à SEn) remplissent dans une large mesure les coins entre les éléments de chambre (KE1 à KEn).

22. Câble optique selon l'une quelconque des revendications 1 à 17,
caractérisé par le fait que les éléments d'appui (SE1 à SEn) ne remplissent que partiellement les coins entre les éléments de chambre (KE1 à KEn).

23. Câble optique selon l'une quelconque des revendications précédentes,
caractérisé par le fait qu'on utilise un matériau plus dur pour les éléments d'appui (SE1 à SEn) que pour les éléments de chambre (KE1 à KEn).

24. Câble optique selon l'une quelconque des revendications précédentes,
caractérisé par le fait que sur les éléments d'appui (SE1 à SEn) il est prévu, respectivement, au moins un épaulement (ASL1 à ASRn) s'étendant dans le sens transversal.

25. Câble optique selon la revendication 24,
caractérisé par le fait que sur les éléments d'appui (SE1 à SEn) il est prévu, respectivement, deux épaulements (ASL1 à ASRn) s'étendant dans des sens opposés.

26. Câble optique selon l'une des revendications 24 ou 25,
caractérisé par le fait que les épaulements (ASL1 à ASRn) sont disposés symétriquement par rapport à l'étendue radiale,par rapport à l'axe du câble, des éléments d'appui (SE1 à SEn).

27. Câble optique selon l'une quelconque des revendications 24 à 26,
caractérisé par le fait que l'étendue des épaulements (ASL1 à ASRn) est choisie de telle sorte que les ouvertures des éléments de chambre (KE1 à KEn) soient recouvertes.

28. Câble optique selon l'une quelconque des revendications 24 à 27,
caractérisé par le fait qu'au moins deux épaulements (ASR31, ASL32) forment un élément de pontage (ASG) continu (figure 3).

29. Câble optique selon l'une quelconque des revendications 24 à 28,
caractérisé par le fait que vus en direction circonférentielle, les épaulements (ASL1 à ASRn) sont accolés les uns aux autres.

30. Câble optique selon l'une quelconque des revendications 24 à 29,
caractérisé par le fait que l'épaisseur de paroi des épaulements (ASL1 à ASRn) est choisie entre 0,5 mm et 2 mm.

31. Câble optique selon l'une quelconque des revendications précédentes,
caractérisé par le fait qu'on prévoit plusieurs couches (LA1, LA2) constituées d'éléments de chambre (KE1 à KEn, KEI* à KEn*) et d'éléments d'appui (SE1 à SEn, SEI* à SEn*). (figure 5).

32. Câble optique selon la revendication 31,
caractérisé par le fait qu'une couche intermédiaire est respectivement appliquée sur une couche (LA1, LA2) constituée d'éléments de chambre (KE1 à KEn, KE1* à KEn*) et d'éléments d'appui (SE1 à SEn, SET* à SEn*).

33. Câble optique selon l'une des revendications 31 ou 32,
caractérisé par le fait que dans les différentes couches (LA1, LA2), les éléments d'appui (SE1 à SEn) sont constitués différemment.

34. Câble optique selon l'une quelconque des revendications précédentes,
caractérisé par le fait qu'il est prévu à l'extérieur au moins une gaine extérieure (AH) et/ou au moins une armature (BW).

35. Câble optique selon l'une quelconque des revendications précédentes,
caractérisé par le fait que les caractéristiques mécaniques des parties médianes des éléments d'appui (SE1 à SEn) et/ou des épaulements (ASL1 à ASRn) qui s'étendent radialement par rapport à l'axe du câble, sont différentes dans leur section transversale ou les unes par rapport aux autres.

36. Câble optique selon l'une quelconque des revendications précédentes,
caractérisé par le fait que les éléments d'appui (SE1 à SEn) sont fixés à l'élément de coeur (ZKE) par leurs embases.

37. Procédé de fabrication d'un câble optique (OC1) selon l'une quelconque des revendications précédentes,
caractérisé en ce qu'on dispose les éléments de chambre (KE1 à KEn) indépendants de façon annulaire autour de l'axe du câble en au moins une couche de câblage, et qu'on insère les éléments d'appui (SE1 à SEn), qui s'étendent radialement par rapport à l'axe du câble, à partir de l'extérieur entre les éléments de chambre (KE1 à KEn).

38. Procédé selon la revendication 37,
caractérisé par le fait qu'on applique à l'extérieur par extrusion au moins une gaine extérieure (AH) et/ou une armature (BW).

39. Procédé selon l'une des revendications 37 ou 38,
caractérisé par le fait qu'après la mise en place des éléments de chambre (KE1 à KEn), les guides de bandes (BD1 à BD3) de guides d'ondes lumineuses sont insérés dans ces derniers sous la forme d'un empilage (BS1 à BSn), et que les éléments de chambre (KE1 à KEn) sont ensuite fermés par la mise en place des éléments d'appui (SE1 à SEn) pourvus des épaulements (ASL1 à ASRn).
